# FASCICULE DE BREVET EUROPEEN

(11) **EP 1 052 353 B1**
(45) Date de publication et mention de la délivrance du brevet: **28.09.2005**
(21) Numéro de dépôt: 00401282.9
(22) Date de dépôt: 10.05.2000
(51) Int. Cl.: E05B 49/00, B60R 25/00

(54) **Système sécurisé pour la commande du déverrouillage d'au moins un ouvrant de véhicule automobile**
Sicherheitssystem zum Steuern der Entriegelung von mindestens einer Kraftfahrzeugöffnung
Secure system for controlling the release of at least one motor vehicle opening

(30) Priorité: 11.05.1999 FR 9905988
(43) Date de publication de la demande: 15.11.2000
(73) Titulaire: VALEO SECURITE HABITACLE S.A.S., 94042 Créteil Cédex (FR)
(72) Inventeur: Rydel, Charles, 75012 Paris (FR)
(74) Mandataire: Rosolen-Delarue, Katell

(56) Documents cités:
- DE-C- 4 409 167
- GB-A- 1 595 796
- GB-A- 2 309 046
- GB-A- 2 310 300

## Description

La présente invention est relative à un système sécurisé pour la commande du déverrouillage d'au moins un ouvrant de véhicules automobiles.

Dans les systèmes de commande à distance actuellement utilisés pour le déverrouillage de portières de véhicules automobiles, l'utilisateur doit actionner manuellement sa télécommande (transpondeur intégré à la partie de préhension de sa clé mécanique) pour actionner le déverrouillage des portières.

Or, pour un plus grand confort de l'utilisateur, on souhaite supprimer ce type de manipulations.

Il a récemment été proposé des systèmes dits "mains libres" dans lesquels l'utilisateur porte un transpondeur qui est par exemple intégré à un badge. Ce transpondeur comporte d'une part des moyens capacitifs qui se chargent lorsque lesdits moyens de réception/émission reçoivent un rayonnement radio-fréquence, et d'autre part une antenne dans laquelle lesdits moyens capacitifs se déchargent lorsque ce rayonnement disparaît. A réception d'un signal d'interrogation radio-fréquence émis à partir du véhicule, le transpondeur émet de lui-même en réponse un signal d'identification radio-fréquence. Lorsque ce signal est reçu et identifié par des moyens prévus à cet effet sur le véhicule, ces moyens commandent le déverrouillage de l'ouvrant.

Un tel système est totalement transparent pour l'utilisateur, puisque le déverrouillage des portières est commandé sans que l'utilisateur n'ait à effectuer d'autres opérations que celle consistant pour lui à manipuler la poignée de sa portière.

De tels systèmes "mains libres" posent toutefois des problèmes de sécurité.

Notamment, certaines personnes « mal intentionnées » peuvent copier le signal d'interrogation émis à partir du véhicule pour le ré- émettre à proximité du transpondeur, alors même que l'utilisateur porteur de ce transpondeur se trouverait dans un lieu éloigné du véhicule. En disposant de moyens adéquats à proximité de l'utilisateur, ils mémorisent le signal d'identification émis en réponse par le transpondeur et ré- émettent ce signal au voisinage du véhicule pour obtenir le déverrouillage des portières de celui-ci.

Un but de l'invention est de proposer une solution permettant d'empêcher ce type de détournements.

L'invention propose à cet effet un système pour la commande de moyens pour le verrouillage/déverrouillage d'au moins un ouvrant de véhicule automobile tel que revendiqué dans la revendication 1.

En particulier, selon un mode de réalisation avantageux, les moyens d'émission/réception destinés à être portés par l'utilisateur sont constitués par un transpondeur comportant des moyens capacitifs qui se chargent lorsque lesdits moyens d'émission/réception reçoivent un rayonnement radio-fréquence, ainsi qu'une antenne dans laquelle lesdits moyens capacitifs se déchargent lorsque ce rayonnement disparaît et les moyens de détection comportent des moyens pour détecter sur un signal d'identification reçu sur les moyens d'émission/réception, une modification d'un paramètre de la chaîne de transmission qui réalise l'émission du signal d'interrogation à partir du véhicule, sa réception par le transpondeur, l'émission du signal d'identification par le transpondeur et sa réception sur le véhicule.

Un tel système est avantageusement complété par les différentes caractéristiques suivantes prises seules ou selon toutes les combinaisons techniquement possibles :
- le signal d'interrogation émis à partir du véhicule est un signal qui se décompose sur au moins deux fréquences.
- au moins une partie du signal émis à partir du véhicule est modulée en amplitude et/ou en phase et/ou en fréquence avec un code pseudo-aléatoire.
- le système comporte sur le véhicule des moyens aptes à déterminer une modification d'une signature fréquentielle sur le signal d'identification reçu.
- le système comporte sur le véhicule des moyens aptes à déterminer une modification d'une signature impulsionnelle sur le signal d'identification reçu.
- le système comporte sur le véhicule des moyens pour déterminer la fonction de corrélation entre le signal d'interrogation et le signal d'identification reçu.
- le système comporte des moyens pour analyser la forme de la fonction de corrélation de façon à détecter l'interposition de moyens d'émission/réception intermédiaires, entre le véhicule et l'utilisateur.
- le système comporte des moyens pour calculer la Transformée de Fourrier de la fonction de corrélation et pour déterminer, en fonction de cette Transformée de Fourrier, la bande passante de la chaîne de transmission de signal.
- le système comporte sur le véhicule des moyens aptes à déterminer un retard sur le signal d'identification reçu.
- le système comporte des moyens pour déterminer le retard dont il faut décaler le signal d'interrogation pour le cas échéant obtenir un pic de corrélation.

D'autres caractéristiques et avantages de l'invention ressortiront encore de la description qui suit qui est purement illustrative et non limitative et qui doit être lue en regard des dessins annexés sur lesquels :
- la figure 1a est une représentation synoptique illustrant un système conforme à l'invention ;
- la figure 1b illustre le même système avec des moyens d'émission /réception intermédiaires interposés par des personnes « mal intentionnées » ;
- la figure 2a illustre un exemple de code pseudo-aléatoire ;
- la figure 2b représente en fonction du nombre de bits de décalage la fonction de corrélation entre le code pseudo-aléatoire de la figure 2a et le même code décalé selon un registre circulaire ;
- la figure 2c représente la Transformée de Fourrier de la fonction de corrélation de la figure 2b.

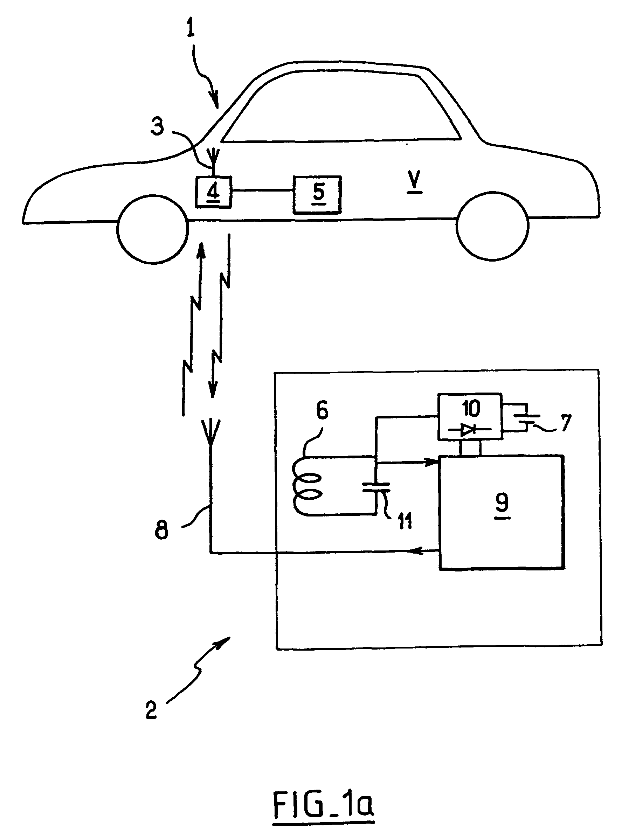

On a représenté sur la figure 1a un véhicule V qui porte des moyens d'émission/réception 1 destinés à échanger avec un transpondeur 2.

Les moyens 1 d'émission/réception comportent une antenne 3 disposée par exemple à proximité d'une poignée de portière du véhicule, ou dans celle-ci, ainsi que des moyens 4 de démodulation et de détection et une unité de gestion 5 à laquelle ces moyens 4 sont reliés.

Le transpondeur 2 comporte quant à lui un enroulement secondaire 6 aux bornes duquel est monté un condensateur 11 formant un circuit accordé. Il comporte également une antenne d'émission 8, ainsi qu'un circuit intégré 9 qui est relié d'une part à l'enroulement secondaire 6 et au condensateur 11 à l'antenne 8 ainsi qu'aux moyens capacitifs 7 d'un bloc de redressement 10. Le circuit intégré 9 comporte des moyens de mémorisation dans lesquels est stocké un code permettant l'identification du transpondeur 2 par le véhicule.

Le véhicule V comporte des moyens destinés à permettre de détecter la présence d'un individu à proximité du véhicule. Ces moyens sont par exemple constitués de capteurs disposés dans les poignées des portières et permettant de détecter qu'un individu approche sa main d'une poignée ou actionne celle-ci.

Lorsque la présence d'un individu à proximité du véhicule est détectée par ces moyens, les moyens 1 émettent un signal d'interrogation radiofréquence.

Le rayonnement radiofréquence de ce signal est reçu par l'enroulement secondaire 6 du transpondeur 2 et charge le condensateur 7. Lorsque ce rayonnement s'interrompt, ledit condensateur 7 se décharge à travers le circuit intégré 9. Ladite antenne 8 émet alors un signal radiofréquence qui correspond au signal radio-fréquence reçu des moyens 1 et qui en outre est modulé en amplitude, en phase ou en fréquence par le circuit intégré 9.

Ce signal porte le code d'identification du transpondeur 2 et, à réception et démodulation par les moyens 1 et 4, déclenche la commande des moyens de verrouillage/déverrouillage des portières par l'unité 5.

Outre la démodulation du signal reçu, les moyens 4 mettent en oeuvre sur ce signal un traitement qui permet de détecter une modification d'un paramètre de la chaîne de transmission qui réalise l'émission et la réception du signal d'interrogation, puis la réception et l'émission du signal d'identification.

Selon un premier mode de réalisation avantageux, le signal d'interrogation émis par les moyens 1 est modulé en fréquence par lesdits moyens 1, de façon à se décomposer sur au moins deux fréquences, par exemple égales à 125 kHz et 112, 5 kHz.

Le transpondeur 2 émet en réponse un signal d'identification qui reprend le rapport des niveaux de modulation. Par rapport aux deux fréquences du signal d'interrogation initialement émis par les moyens 1, les deux fréquences du signal d'identification présentent une certaine atténuation de l'une par rapport à l'autre.

Cette atténuation relative constitue une signature fréquentielle du transpondeur 2.

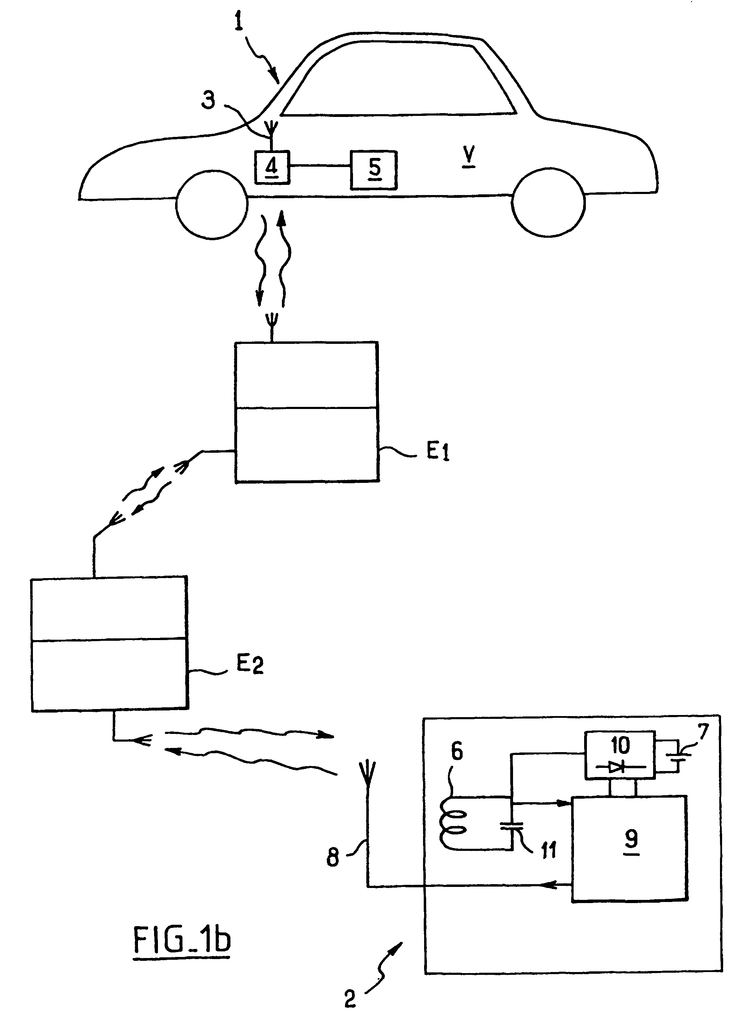

Or, si des moyens d'émission/réception intermédiaires (E1, E2 sur la figure 1b) sont interposés entre le véhicule et le transpondeur 2 par des personnes mal intentionnées, l'atténuation relative des deux composantes du signal d'identification sera a priori modifiée.

Les moyens 4 comportent des moyens qui empêchent le déverrouillage des ouvrants du véhicule ou/et qui avertissent par un signal convenu de la tentative d'effraction (alarme, information par un système de « bip » du propriétaire du véhicule) lorsque la différence de l'atténuation relative des deux composantes du signal reçu et d'une atténuation théorique attendu est supérieure à un seuil donné.

C'est pourquoi, selon un autre mode de réalisation préféré, on utilise comme signal d'interrogation un signal à spectre étalé et notamment un signal dont au moins une partie est modulée en amplitude, en fréquence ou en phase avec un code binaire de type pseudo-aléatoire.

Les codes pseudo-aléatoires (également appelés codes de longueur maximale) sont classiquement connus et ont des propriétés spectrales analogues à celles d'un bruit blanc tout en étant déterministe.

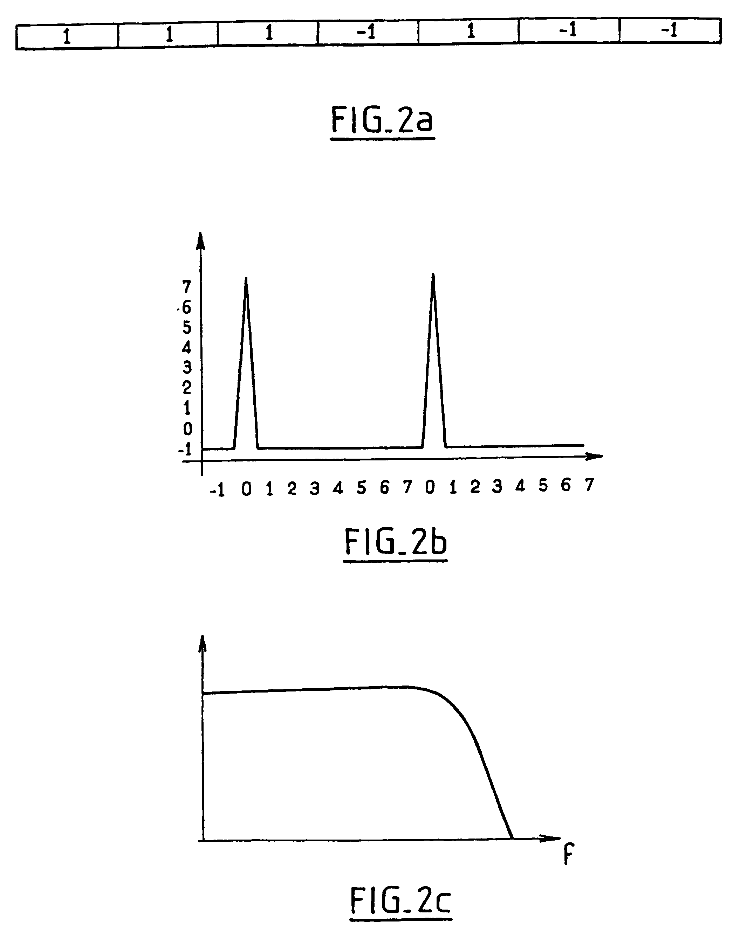

Un exemple de séquence de longueur maximale codée sur 7 bits est donné sur la figure 2a. Les valeurs des bits de cette séquence sont par convention choisies égale à 1 et -1.

La valeur de la fonction d'autocorrélation d'une telle séquence se calcule en multipliant bit par bit la séquence avec elle-même et en additionnant les valeurs obtenues pour les différents bits Cette valeur de fonction d'autocorrélation est égale à 7.

La valeur de la fonction de corrélation d'une telle séquence avec la même séquence décalée d'un nombre de bits compris entre 1 et 6 vaut -1 dans tous les cas.

La figure 2b représente en fonction du nombre de bits de décalage, la fonction de corrélation entre cette séquence et la même séquence décalée dans un registre circulaire. On constate que cette fonction de corrélation est impulsionnelle.

C'est là une propriété générale des codes pseudo-aléatoires, dont les fonctions de corrélation sont similaires à celles des bruits blancs et sont sensiblement égales à des pics de Dirac.

Par conséquent, en l'absence de moyens d'émission/réception intermédiaires interposés entre le véhicule et l'utilisateur, la fonction de corrélation entre le signal d'identification reçu et le signal d'interrogation est une réponse impulsionnelle donnée.

Par contre, en présence de moyens d'émission/réception intermédiaires, la fonction de corrélation entre le signal d'identification reçu et le signal d'interrogation est déformée par rapport à la réponse impulsionnelle donnée. Le moment où le maximum de corrélation apparaît est en outre retardé.

Comme on l'aura compris, les moyens 4 comprennent des moyens pour déterminer cette fonction de corrélation et pour analyser la forme de la réponse obtenue et/ou le retard dont il faut décaler l'un ou l'autre des deux signaux pour le cas échéant obtenir un pic de corrélation, de façon à détecter l'interposition de moyens d'émission/réception entre le véhicule V et le transpondeur 2.

Le calcul de la fonction de corrélation est par exemple réalisé en mettant en oeuvre un traitement FHT (Fast Hadamar Fourrier Transform selon la terminologie anglo-saxonne généralement utilisée).

Une analyse de la forme de la réponse obtenue peut par exemple mettre en oeuvre un traitement par la méthode des moindres carrés.

Une détection sur le temps dont il faut décaler l'un ou l'autre des deux signaux pour le cas échéant obtenir un pic de corrélation peut par exemple mettre en oeuvre une comparaison à des valeurs seuils données.

En variante encore, on peut mettre en oeuvre sur la fonction de corrélation un calcul de Transformée de Fourrier.

Dans le cas où la fonction de corrélation est effectivement impulsionnelle, la Transformée de Fourrier est, ainsi qu'illustrée sur la figure 2c, un plateau s'étendant sur la largeur de la bande passante de la chaîne de transmission qui assure l'émission et la réception du signal d'interrogation et l'émission et la réception du signal d'identification.

Une mesure de la largeur de cette bande et une comparaison de la largeur ainsi mesurée à une valeur seuil permet de détecter l'interposition de moyens d'émission/réception entre le véhicule V et le transpondeur 2.

Le calcul de la Transformée de Fourrier peut s'effectuer en mettant en oeuvre un calcul par Transformée de Fourrier rapide (FFT ou Fast Fourrier Transform selon la terminologie anglosaxonne généralement utilisée).

On notera que les systèmes qui viennent d'être décrits présentent l'avantage de sécuriser les transmissions entre le véhicule et le transpondeur sans nécessiter de moyens de calcul ou de puissance de mémoire supplémentaires au niveau du transpondeur. Celui-ci peut donc être d'un encombrement réduit et présenter une faible consommation (inférieure à 1 µA).

Le dispositif ne met pas en oeuvre de systèmes utilisant des horloges pour la détection d'éventuels retards dans l'échange (question-réponse) entre le badge et le véhicule car ces systèmes nécessitent une précision difficile à atteindre.

## Revendications

1. Système pour la commande de moyens pour le verrouillage/déverrouillage d'au moins un ouvrant de véhicule automobile comportant
• des moyens d'émission/réception qui sont destinés à émettre, à partir du véhicule, un signal radio-fréquence d'interrogation,
• des moyens d'émission/réception qui sont destinés à être portés par un utilisateur et qui à réception du signal d'interrogation, sont destinés à émettre un signal d'identification radio-fréquence pour actionner, en cas d'identification positive, le déverrouillage de l'ouvrant,
et dans lequel au moins un paramètre de transmission du signal d'identification radio-fréquence répond à une relation prédéfinie avec un paramètre du signal radio-fréquence d'interrogation,
**caractérisé en ce qu'**il comporte des moyens de détection qui sont reliés aux moyens d'émission/réception du véhicule et qui sont aptes à détecter, sur un signal d'identification reçu sur les moyens d'émission/réception du véhicule, une modification de la relation entre les paramètres associés aux signaux d'interrogation et d'identification, susceptible d'être due à l'interposition, entre le véhicule et l'utilisateur, de moyens d'émission/réception intermédiaires.

2. Système selon la revendication 1, **caractérisé en ce que** les moyens d'émission/réception destinés à être portés par l'utilisateur sont constitués par un transpondeur comportant des moyens capacitifs qui se chargent lorsque lesdits moyens d'émission/réception reçoivent un rayonnement radio-fréquence, ainsi qu'une antenne dans laquelle lesdits moyens capacitifs se déchargent lorsque ce rayonnement disparaît et **en ce que** les moyens de détection comportent des moyens pour détecter sur un signal d'identification reçu sur les moyens d'émission/réception, une modification d'un paramètre de la chaîne de transmission qui réalise l'émission du signal d'interrogation à partir du véhicule, sa réception par le transpondeur, l'émission du signal d'identification par le transpondeur et sa réception sur le véhicule.

3. Système selon la revendication 2, **caractérisé en ce que** le signal d'interrogation émis à partir du véhicule est un signal qui se décompose sur au moins deux fréquences.

4. Système selon la revendication 3, **caractérisé en ce qu'**au moins une partie du signal émis à partir du véhicule est modulée en amplitude et/ou en phase et/ou en fréquence avec un code pseudo-aléatoire.

5. Système selon l'une des revendications 3 et 4, **caractérisé en ce qu'**il comporte sur le véhicule des moyens aptes à déterminer une modification d'une signature fréquentielle ou impulsionnelle sur le signal d'identification reçu.

6. Système selon la revendication 6, **caractérisé en ce qu'**il comporte sur le véhicule des moyens aptes à déterminer une signature impulsionnelle.

7. Système selon la revendication 4, **caractérisé en ce qu'**il comporte sur le véhicule des moyens pour déterminer la fonction de corrélation entre le signal d'interrogation et le signal d'identification reçu.

8. Système selon la revendication 7, **caractérisé en ce qu'**il comporte des moyens pour analyser la forme de la fonction de corrélation de façon à détecter l'interposition de moyens d'émission/réception intermédiaires, entre le véhicule et l'utilisateur.

9. Système selon la revendication 7, **caractérisé en ce qu'**il comporte des moyens pour calculer la Transformée de Fourrier de la fonction de corrélation et pour déterminer, en fonction de cette Transformée de Fourrier, la bande passante de la chaîne de transmission de signal.

10. Système selon la revendication 7, **caractérisé en ce qu'**il comporte des moyens pour déterminer le retard dont il faut décaler le signal d'interrogation pour le cas échéant obtenir un pic de corrélation.

## Patentansprüche

1. System zum Steuern von Mitteln für die Verriegelung/Entriegelung zumindest einer Kraftfahrzeugtür, mit
- Sende-/Empfangsmitteln, die dazu bestimmt sind, ausgehend vom Fahrzeug ein HF-Abfragesignal auszugeben,
- Sende-/Empfangsmitteln, die dazu bestimmt sind, von einem Benutzer mitgeführt zu werden und bei Empfang des Abfragesignals ein HF-Identifikationssignal auszugeben, um bei positiver Identifizierung die Entriegelung der Tür zu betätigen,
bei dem zumindest ein Parameter der Übertragung des HF-Identifikationssignals einem vorbestimmten Verhältnis mit einem Parameter des HF-Abfragesignals entspricht,
**dadurch gekennzeichnet, dass** es Erfassungsmittel enthält, die mit den Sende-/Empfangsmitteln des Fahrzeugs verbunden sind und an einem von den Sende-/Empfangsmitteln des Fahrzeugs empfangenen Identifikationssignal eine Änderung des Verhältnisses zwischen den dem Abfragesignal bzw. dem Identifikationssignal zugeordneten Parametern erfassen können, welche Änderung auf die Zwischenschaltung von zwischengeordneten Sende-/Empfangsmitteln zwischen Fahrzeug und Benutzer zurückführbar ist.

2. System nach Anspruch 1, **dadurch gekennzeichnet, dass** die Sende-/Empfangsmittel, die dazu bestimmt sind, von dem Benutzer mitgeführt zu werden, aus einem Transponder bestehen, der kapazitive Mittel enthält, welche dann geladen werden, wenn die Sende-/Empfangsmittel eine HF-Strahlung empfangen, sowie eine Antenne, in welche die kapazitiven Mittel sich dann entladen, wenn diese Strahlung wegfällt, und dass die Erfassungsmittel Mittel enthalten, um an einem an den Sende-/Empfangsmitteln empfangenen Identifikationssignal eine Änderung eines Parameters der Übertragungskette zu erfassen, über welche ausgehend vom Fahrzeug das Aussenden des Abfragesignals, dessen Empfang über den Transponder, das Aussenden des Identifikationssignals über den Transponder und dessen Empfang am Fahrzeug erfolgen.

3. System nach Anspruch 2, **dadurch gekennzeichnet, dass** das vom Fahrzeug ausgehend gesendete Abfragesignal ein Signal ist, das sich auf zumindest zwei Frequenzen aufteilt.

4. System nach Anspruch 3, **dadurch gekennzeichnet, dass** zumindest ein Anteil des vom Fahrzeug ausgehend gesendeten Signals mit einem pseudozufälligen Code amplituden- und/oder phasen- und/oder frequenzmoduliert wird.

5. System nach einem der Ansprüche 3 und 4, **dadurch gekennzeichnet, dass** es am Fahrzeug Mittel enthält, die eine Änderung einer Frequenz- oder Impulskennung am empfangenen Identifikationssignal bestimmen können.

6. System nach Anspruch 6, **dadurch gekennzeichnet, dass** es am Fahrzeug Mittel enthält, die eine Impulskennung bestimmen können.

7. System nach Anspruch 4, **dadurch gekennzeichnet, dass** es am Fahrzeug Mittel enthält, um die Korrelationsfunktion zwischen dem Abfragesignal und dem empfangenen Identifikationssignal zu bestimmen.

8. System nach Anspruch 7, **dadurch gekennzeichnet, dass** es Mittel enthält, um die Form der Korrelationsfunktion zu analysieren, so dass die Zwischenschaltung von zwischengeordneten Sende-/Empfangsmitteln zwischen Fahrzeug und Benutzer erfasst wird.

9. System nach Anspruch 7, **dadurch gekennzeichnet, dass** es Mittel enthält, um die Fourrier-Transformierte aus der Korrelationsfunktion zu berechnen und um in Abhängigkeit von dieser Fourrier-Transformierten die Bandbreite der Signalübertragungskette zu bestimmen.

10. System nach Anspruch 7, **dadurch gekennzeichnet, dass** es Mittel enthält, um die Verzögerung zu bestimmen, mit der das Abfragesignal zu verschieben ist, um gegebenenfalls eine Korrelationsspitze zu erhalten.

## Claims

1. System for control of means of locking / unlocking at least one automobile vehicle door comprising:
• emission / reception means designed to transmit a radio-frequency interrogation signal from the vehicle,
• emission / reception means that are intended to be carried by a user and that are designed to transmit a radio-frequency identification signal so as to unlock the door if the identification is positive, on reception of the interrogation signal.
and in which at least one radio-frequency identification signal transmission parameter satisfies a predefined relation with a parameter of the interrogation radio-frequency signal
**characterised in that** it comprises detection means connected to the vehicle emission / reception means and that can detect a modification of the relation between the parameters associated with the interrogation and identification signals following an identification signal received on the vehicle emission / reception means, that can be due to the insertion of intermediate emission / reception means between the vehicle and the user.

2. System according to claim 1, **characterised in that** the emission / reception means that will be carried by the user are composed of a transponder comprising capacitive means that charge when the said emission / reception means receive a radio-frequency radiation, and an antenna in which the said capacitive means discharge when this radiation disappears and **in that** the detection means comprise means of detecting a modification of a parameter in the transmission system that emits the interrogation signal from the vehicle following an identification signal received on the emission / reception means, its reception by the transponder, emission of the identification signal by the transponder and its reception on the vehicle.

3. System according to claim 2, **characterised in that** the interrogation signal sent from the vehicle is decomposed on at least two frequencies.

4. System according to claim 3, **characterised in that** at least a part of the signal sent from the vehicle is amplitude and / or phase and / or frequency modulated with a pseudo-random code.

5. System according to one of claims 3 and 4, **characterised in that** it comprises means on the vehicle of determining a modification of a frequency or pulse signature on the received identification signal.

6. System according to claim 6, **characterised in that** it comprises means on the vehicle capable of determining a pulse signature.

7. System according to claim 4, **characterised in that** it comprises means on the vehicle of determining the correlation function between the interrogation signal and the received identification signal.

8. System according to claim 7, **characterised in that** it comprises means of analysing the shape of the correlation function so as to detect the insertion of intermediate emission / reception means between the vehicle and the user.

9. System according to claim 7, **characterised in that** it comprises means of calculating the Fourrier Transform of the correlation function and determining the passband of the signal transmission system as a function of this Fourrier Transform.

10. System according to claim 7, **characterised in that** it comprises means of determining the delay for which the interrogation signal has to be offset to obtain a correlation peak if required.
